# FASCICULE DE BREVET EUROPEEN

(11) **EP 4 077 958 B1**
(45) Date de publication et mention de la délivrance du brevet: **11.10.2023**
(21) Numéro de dépôt: 20845200.3
(22) Date de dépôt: 15.12.2020
(51) Int. Cl.: F16C 19/16, F16C 33/66

(54) **ROULEMENT À TROIS POINTS DE CONTACT AVEC DRAIN AMÉLIORÉ**
DREIPUNKTWÄLZLAGER MIT VERBESSERTEM ABFLUSS
THREE-POINT CONTACT ROLLING BEARING WITH IMPROVED DRAIN

(30) Priorité: 16.12.2019 FR 1914482
(43) Date de publication de la demande: 26.10.2022
(73) Titulaire: Safran Helicopter Engines, 64510 Bordes (FR)
(72) Inventeur: FULLERINGER, Benjamin, Nicolas, 77550 MOISSY-CRAMAYEL (FR); LECOUVREUR, Damien, Paul, Antonin, 77550 MOISSY-CRAMAYEL (FR); CRABOS, Laurent, Jean, 77550 MOISSY-CRAMAYEL (FR)
(74) Mandataire: Cabinet Beau de Loménie
(86) Numéro de dépôt international: PCT/FR2020/052435
(87) Numéro de publication internationale: WO 2021/123596

(56) Documents cités:
- EP-A1- 0 769 631
- EP-A1- 1 898 072
- DE-A1-102006 012 001
- FR-A1- 3 056 656

## Description

### Domaine Technique

Le présent exposé concerne les roulements utilisés notamment dans les turbomachines et moteurs électriques employés dans le domaine de l'aéronautique.

### Technique antérieure

Les roulements employés dans les turbomachines sont employés à des vitesses élevées. Il est ainsi nécessaire d'y assurer une circulation d'un fluide, typiquement de l'huile ou du carburant, afin d'assurer la lubrification et le refroidissement des roulements. Les solutions connues proposent de réaliser des perçages s'étendant selon un plan radial par rapport à l'axe du roulement afin s'assurer une circulation de fluide. Toutefois, ces solutions ne présentent pas un gain total suffisant. En effet, le perçage centré sur le plan radial implique de réaliser un roulement à 4 points de contact afin de s'assurer que les éléments de roulement ne viennent pas au contact du perçage. Or, une telle structure peut entraîner un fonctionnement avec deux points de contact sur la bague externe, en particulier dans le cas d'un fonctionnement pendant lequel les éléments de roulement sont soumis à des efforts axiaux combinés à des efforts radiaux substantiels. C'est notamment le cas à hautes vitesses, avec des efforts centrifuges radiaux importants. Un tel fonctionnement avec deux points de contact sur la bague externe génère un glissement de chaque élément de roulement au niveau du deuxième point de contact apparu sur la bague externe, ce qui entraîne une dissipation de puissance importante qui vient annuler le gain obtenu par la circulation d'huile. Le bilan en termes de puissance pour les systèmes actuels est donc quasi nul à haute vitesse.

EP 1 898 072 A1 divulgue les caractéristiques du préambule de la revendication 1.

### Exposé de l'invention

Le présent exposé vise ainsi à répondre au moins partiellement à cette problématique.

A cet effet, le présent exposé concerne un roulement à trois points de contact, comprenant une bague interne et une bague externe définissant respectivement une piste interne et une piste externe entre lesquelles sont disposés une pluralité d'éléments de roulement sphériques, de manière à définir un mouvement de rotation selon un axe principal entre la bague interne et la bague externe, lesdits éléments de roulements étant centrés sur un plan de roulement perpendiculaire à l'axe principal,
dans lequel
la piste interne définit un premier point de contact et un second point de contact distincts entre chaque élément de roulement et la bague interne, la piste externe définit un troisième point de contact entre chaque élément de roulement et la bague externe, ledit troisième point de contact étant situé dans un secteur de la piste externe délimité par une extrémité proximale de la piste externe d'une part, et par le plan de roulement d'autre part,
la bague externe comprend un drain aménagé dans la piste externe, et débouchant d'une surface externe de la bague externe, ledit drain débouchant sur la piste externe de manière excentrée par rapport au plan de roulement, dans un secteur de la piste externe délimité par le plan de roulement d'une part, et une extrémité distale de la piste externe d'autre part, le drain et le troisième point de contact étant disjoints, caractérisé en ce que le drain est formé par un alésage continu s'étendant depuis la piste externe et jusqu'à une extrémité distale de la bague externe.

Selon un exemple, le drain s'étend selon une direction présentant une composante radiale non nulle et une composante axiale non nulle par rapport à l'axe principal, et typiquement une composante circonférentielle non nulle. Selon une autre variante, le drain s'étend selon une direction parallèle à l'axe principal.

Selon un exemple, le drain débouche d'une surface externe de la bague externe s'étendant radialement par rapport à l'axe principal.

Selon un exemple, le drain s'étend selon une direction radiale par rapport à l'axe principal.

Selon un exemple, la bague externe présente une extrémité proximale et une extrémité distale, le troisième point de contact étant dans une zone délimitée axialement par l'extrémité proximale et par le plan de roulement, et dans lequel la bague externe forme un épaulement proximal et un épaulement distal de part et d'autre du plan de roulement selon l'axe principal, lesdits épaulements présentant des dimensions distinctes selon une direction radiale par rapport à l'axe principal.

L'épaulement proximal présente alors typiquement une épaisseur plus importante que l'épaulement distal, l'épaisseur étant mesurée selon une direction radiale par rapport à l'axe principal.

Selon un exemple, la bague externe comprend une pluralité de drains disjoints répartis autour de l'axe principal.

Selon un exemple, la piste externe présente une forme d'ogive, formée par deux arcs de cercles ayant des centres distincts et qui s'intersectent en un point formant un sommet de ladite ogive, et dans lequel le drain débouche sur la piste externe au niveau dudit sommet.

Le présent exposé concerne également une turbomachine comprenant au moins un roulement selon l'une des revendications précédentes.

Le présent exposé concerne également un aéronef comprenant une telle turbomachine.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 présente une vue partielle en perspective d'un roulement selon un exemple de réalisation.
[Fig. 2] La figure 2 est une vue en coupe du roulement représenté sur la figure 1.
[Fig. 3] La figure 3 illustre schématiquement un mode de fonctionnement du roulement.
[Fig. 4] La figure 4 est une vue schématique illustrant un exemple de structure de la bague externe.
[Fig. 5] La figure 5 est une vue schématique illustrant un exemple de structure de la bague externe.
[Fig. 6] La figure 6 présente une vue partielle en perspective d'un roulement selon un autre exemple de réalisation.
[Fig. 7] La figure 7 est une vue en coupe du roulement représenté sur la figure 5.
[Fig. 8] La figure 8 présente une vue partielle en perspective d'un roulement selon un autre exemple de réalisation.
[Fig. 9] La figure 9 est une vue en coupe du roulement représenté sur la figure 7.

Sur l'ensemble des figures, les éléments en commun sont repérés par des références numériques identiques.

### Description des modes de réalisation

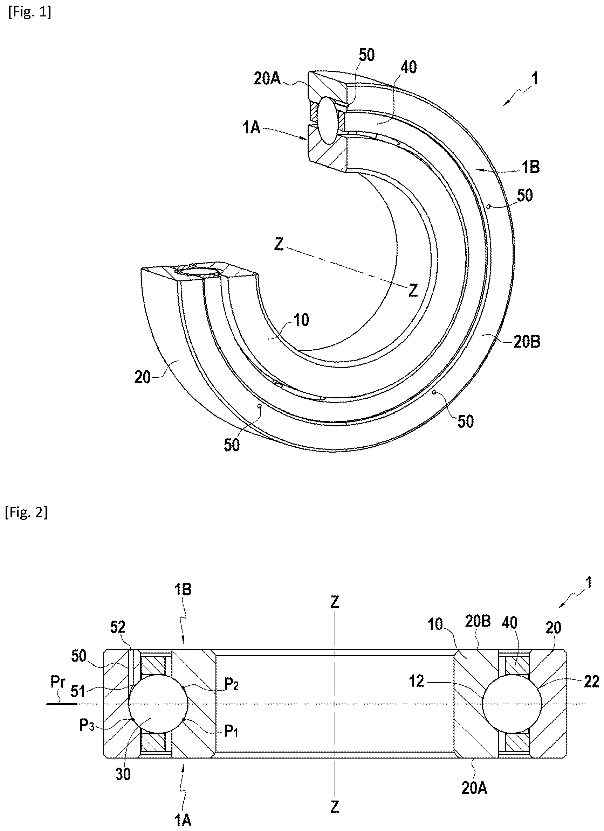

Les figures 1 et 2 présentent un premier exemple de roulement 1 selon un aspect de l'invention. La figure 1 est vue en perspective avec un quart du roulement 1 tronqué, et la figure 2 est une vue en coupe selon un plan passant par l'axe principal Z-Z. Le roulement 1 tel que présenté sur les figures 1 et 2 présente une bague interne 10 et une bague externe 20 entre lesquelles sont disposés une pluralité d'éléments de roulement 30, ici des éléments de roulements sphériques ou billes.

Les éléments de roulement 30 sont ici partiellement entourés par une cage 40 optionnelle, qui améliore le maintien axial des éléments de roulement 30.

On définit de manière arbitraire une extrémité proximale 1A et une extrémité distale 1B pour le roulement 1, ces désignations n'étant pas limitatives et ayant uniquement une vocation illustrative. On pourra par la suite se référer à une extrémité proximale ou distale des différents éléments, ces désignations étant indiquées par rapport à l'extrémité proximale 1A et à l'extrémité distale 1B du roulement 1, et étant repérées par des références numériques auxquelles sont ajoutées respectivement les lettres A et B.

Le roulement 1 définit un mouvement de rotation relatif entre la bague interne 10 et la bague externe 20 selon un axe de rotation que l'on qualifie d'axe principal Z-Z. On définit par rapport à cet axe principal une direction radiale X-X, s'étendant radialement par rapport à l'axe principal Z-Z.

Les éléments de roulement 30 sont centrés sur un plan de roulement Pr qui s'étend radialement par rapport à l'axe principal Z-Z. Par centrés, on entend que les centres des différents éléments de roulement 30 sont disposés dans le plan de roulement Pr, typiquement aux tolérances de fabrication près. Puisque par définition le plan de roulement passe par les centres des éléments de roulement 30, sa position dans un repère fixe peut varier quelque peu dans la direction de l'axe principal Z-Z, du fait que les éléments de roulement 30 peuvent être amenés à se déplacer quelque peu dans cette même direction vis-à-vis de la bague interne 10 et/ou de la bague externe 20, en particulier lors d'une modification de l'intensité ou du sens de la charge axiale appliquée sur le roulement.

Pour les roulements, on fait communément référence au facteur de vitesse généralement désigné par NDm, qui est le produit de la vitesse de rotation du roulement N en tours/minute par le diamètre moyen Dm (ou diamètre primitif) du roulement en millimètres. Le facteur de vitesse traduit ainsi à la fois la vitesse de rotation du roulement et ses dimensions. On comprend en effet que plus le roulement 1 présente une dimension importante, plus le facteur de vitesse sera élevé pour une même vitesse de rotation.

Les roulements tels que présentés dans les différents modes de réalisation ont communément un facteur de vitesse supérieur à 1 000 000 NDm, ou typiquement supérieur à 1 200 000 NDm, ou encore supérieur à 1 500 000 NDm. Les roulements présentent typiquement un diamètre moyen Dm supérieur ou égal à 50 mm, et une vitesse de rotation supérieure à 20 000 tours par minute. Pour de tes facteurs de vitesse, on comprend qu'il est nécessaire d'assurer la fonction de lubrification et de refroidissement des roulements.

Le roulement 1 est un roulement à trois points de contact. Dans des conditions normales d'utilisation du roulement 1, on définit ainsi pour chaque élément de roulement 30 trois points de contact répartis entre la bague interne 10 et la bague externe 20. Les roulements 1 tels que considérés sont prévus pour fonctionner avec une direction axiale prédéterminée de la charge, correspondant au fonctionnement nominal d'un rotor tel qu'un arbre de turbomoteur ou plus généralement d'une turbomachine. Toutefois, des inversions de charge peuvent intervenir, entraînant ainsi une inversion du sens d'application de la charge axiale. On se référera ici généralement à un fonctionnement nominal, c'est-à-dire avec une charge axiale selon un sens donné.

La bague interne 10 présente une piste interne 12 au contact de laquelle sont disposés les éléments de roulement 30. La piste interne 12 présente typiquement une forme d'ogive, ou plus généralement une forme avec deux portions, typiquement symétriques ou non symétriques par rapport au plan de roulement Pr, définissant deux points de contact distincts avec chaque élément de roulement 30 de part et d'autre du plan de roulement Pr. On comprend qu'en pratique, les contacts entre les éléments de roulement 30 et les bagues interne 10 et externe 20 ne sont pas nécessairement ponctuels, mais peuvent être surfaciques en raison de la déformation de la matière. Le présent exposé conserve le modèle théorique de contacts ponctuels.

On définit ainsi un premier point de contact P1 entre un élément de roulement 30 et la piste interne 12 de la bague interne 10, le premier point de contact P1 étant positionné entre l'extrémité proximale 1A du roulement 1 et le plan de roulement Pr. On définit également un deuxième point de contact P2 entre un élément de roulement 30 et la piste interne 12 de la bague interne 10, le deuxième point de contact P2 étant positionné entre l'extrémité distale 1B du roulement 1 et le plan de roulement Pr. En fonctionnement, le premier point de contact P1 peut être supprimé, notamment en fonction de la charge appliquée.

La bague interne 10 est typiquement réalisée en deux parties afin de faciliter le montage du roulement 1. La bague interne 10 est ainsi typiquement composée d'un segment proximal et d'un segment distal, dont la jonction se situe au niveau du plan de roulement Pr. Une telle configuration en deux parties permet également de faciliter la lubrification interne du roulement.

La bague externe 20 présente une piste externe 22 au contact de laquelle sont disposés les éléments de roulement 30. La piste externe 22 présente typiquement une forme d'arc de cercle, et définit un unique point de contact avec chaque élément de roulement 30. On définit ainsi un troisième point de contact P3 entre chaque élément de roulement 30 et la piste externe 22 de la bague externe 20, le troisième point de contact P3 étant positionné entre l'extrémité proximale 1A du roulement 1 et le plan de roulement Pr. Le troisième point de contact P3 est typiquement disjoint du plan de roulement Pr.

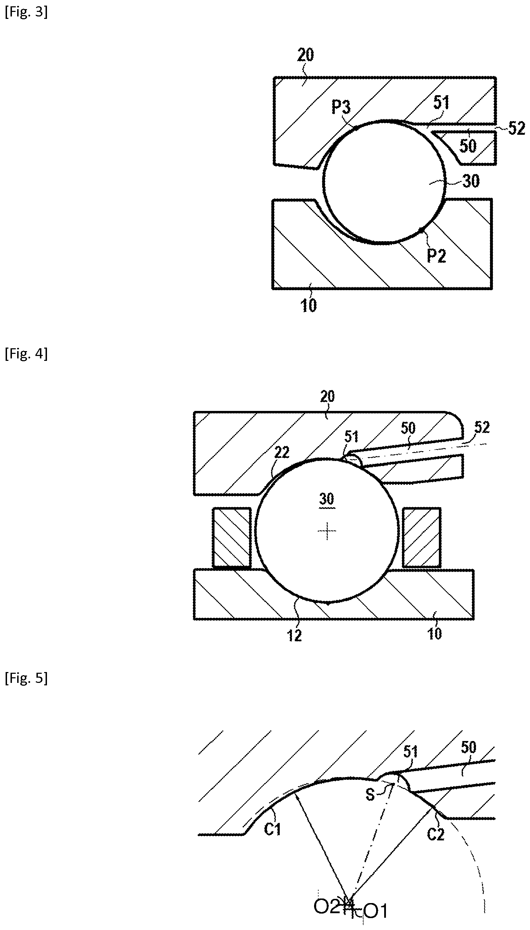

En fonctionnement, le roulement 1 présente deux ou trois points de contact en fonction de la charge appliquée. Dans le cas d'une charge uniquement axiale ou d'une charge axiale dominante selon l'axe principal Z-Z, le roulement 1 fonctionne typiquement avec deux points de contact, à savoir les points de contact P2 et P3 ; le point de contact P1 est alors supprimé, c'est-à-dire inopérant dans cette condition de fonctionnement du roulement. La figure 3 schématise un tel mode de fonctionnement.

Dans le cas d'une charge axiale et radiale avec une charge radiale dominante, ou radiale uniquement, le roulement 1 fonctionne alors avec trois points de contact P1, P2 et P3. On note que bien que certains modes de fonctionnement soient réalisés avec deux points de contact, un tel roulement est communément désigné comme étant un roulement à trois points de contact.

On note par ailleurs qu'en fonction de l'effort exercé, le point de contact P3 tend à se déplacer vers le plan de roulement Pr, par exemple sous l'effet d'un effort radial que subit chaque élément de roulement 30 soumis à des efforts centrifuges du fait de sa rotation autour de l'axe principal Z-Z. Le point de contact P3 ne va cependant pas se déplacer au-delà du plan de roulement Pr sauf en cas d'inversion du sens d'application de l'effort axial.

On comprend ainsi qu'une partie de la piste externe 22 ne présente pas de point de contact avec les éléments de roulement 30. Plus précisément, la partie de la piste externe 22 disposée entre le plan de roulement et l'extrémité distale 1B n'est pas sollicitée par le contact avec les éléments de roulement 30 dans des conditions normales d'utilisation du roulement 1, c'est-à-dire dans le cadre d'une utilisation en tant que butée soumise principalement à une charge axiale selon un sens donné. Le présent exposé propose ainsi d'exploiter cette partie de la piste externe 22 pour réaliser une fonction de drain.

La bague externe 20 comprend ainsi un drain 50 aménagé dans la piste externe 22 et débouchant d'une surface externe de la bague externe 20 de manière à permettre une circulation de fluide. Le drain 50 présente ainsi un premier orifice 51 débouchant sur la piste externe 22, et un second orifice 52 débouchant d'une surface externe de la bague externe 20.

Le premier orifice 51 du drain 50 débouche sur la piste externe 22 en un point décalé par rapport au plan de roulement Pr, de sorte que, le troisième point de contact P3 étant situé dans un secteur de la piste externe 22 délimité par une extrémité proximale de la piste externe 22 d'une part, et par le plan de roulement Pr d'autre part, le premier orifice 51 est quant à lui excentré par rapport au plan de roulement Pr, disjoint du troisième point de contact P3. Le premier orifice 51 est donc situé dans un secteur de la piste externe 22 délimité par le plan de roulement Pr d'une part, et une extrémité distale de la piste externe 22 d'autre part. Le premier orifice 51 du drain 50 est ainsi positionné de manière à ce que dans des conditions normales d'utilisation du roulement 1, les éléments de roulement 30 ne viennent pas au contact du premier orifice 51. Comme détaillé par la suite, la réalisation de la piste externe 22 en forme d'ogive à axe incliné par rapport au plan de roulement Pr permet de s'assurer que les éléments de roulement 30 ne viennent pas au contact du premier orifice 51 lorsque celui-ci est situé au niveau du sommet de l'ogive, y compris en cas de fonctionnement avec inversion de la poussée exercée sur l'arbre rotatif qui porte la bague interne du roulement.

Le second orifice 52 du drain 50 débouche par exemple sur une extrémité axiale de la bague externe 20. Par extrémité axiale, on désigne une surface formant une extrémité de la bague externe 20 selon la direction définie par l'axe principal Z-Z ; typiquement une surface s'étendant radialement par rapport à l'axe principal Z-Z. Dans l'exemple illustré, le second orifice 52 débouche depuis une extrémité distale 20B de la bague externe 20.

Le drain 50 présente un corps de conduit s'étendant entre le premier orifice 51 et le second orifice 52, typiquement selon une direction présentant une composante axiale selon l'axe principal Z-Z, et une composante radiale par rapport à l'axe principal Z-Z. En variante, le drain 50 peut s'étendre selon la direction axiale, c'est-à-dire parallèlement à l'axe principal Z-Z.

Le corps de conduit peut également présenter une composante circonférentielle, de sorte qu'il peut présenter une forme rectiligne ou encore une forme générale d'arc de cercle ou de segment d'ellipse. Par composante circonférentielle, on désigne ici une composante selon une direction perpendiculaire au plan défini par l'axe principal Z-Z et par la direction radiale pour un point donné. La bague externe 20 peut être réalisée par fabrication additive, d'autant plus si le corps de conduit du drain présente une forme courbe qui ne serait pas réalisable par perçage.

Le dimensionnement et la géométrie du corps de conduit peuvent notamment être définis en fonction des conditions normales d'utilisation attendues pour le roulement 1. En fonctionnement, le fluide est centrifugé, et sort donc du drain par le second orifice 52. Le système comprenant le roulement 1 est alors typiquement muni de moyens permettant de recueillir le fluide, et le cas échéant de le refroidir, le filtrer et le ramener dans une zone de stockage avant son éventuelle réinjection dans le roulement 1.

La bague externe 20 présente typiquement une pluralité de drains 50 disjoints et distincts répartis autour de l'axe principal Z-Z, par exemple tout autour de l'axe principal Z-Z. Dans l'exemple illustré sur les figures 1 et 2, le roulement présente 5 drains 50 répartis régulièrement autour de l'axe principal Z-Z. On comprend que le nombre de drains n'est pas limitatif ; le roulement 1 peut présenter un nombre quelconque de drains 50 formés sur la bague externe 20.

En variante, la piste externe 22 présente une forme d'ogive asymétrique par rapport au plan de roulement Pr, c'est-à-dire avec deux portions formant par exemple un tronc de cône asymétrique par rapport au plan de roulement Pr, ou deux arcs de cercles asymétriques par rapport au plan de roulement Pr.

Les figures 4 et 5 illustrent schématiquement ce mode de réalisation. On représente schématiquement sur la figure 4 une vue détaillée de la bague interne 10, la bague externe 20 et d'un élément de roulement 30. La figure 5 illustre la géométrie de la piste externe 22. Dans ce mode de réalisation, la piste externe 22 présente une forme d'ogive, formée de deux arcs de cercles C1 et C2 de rayons respectivement R1 et R2 pouvant être égaux ou distincts, et présentant deux centres, respectivement O1 et O2 distincts. On représente sur la figure 5 le prolongement des arcs de cercles C1 et C2 en pointillés, ce qui met en évidence la forme d'ogive ainsi obtenue. Les deux arcs de cercles s'intersectent au sommet S de l'ogive, par lequel passe un axe symbolisé ici par un trait discontinu et formant un axe de symétrie entre les deux centres O1 et O2 si les deux rayons R1 et R2 sont égaux. De manière générale, que les rayons R1 et R2 soient égaux ou distincts, l'axe de l'ogive forme un axe de symétrie pour un croisillon formé par deux tangentes aux arcs C1 et C2 au sommet de l'ogive. On parle d'ogive inclinée du fait que son axe est incliné par rapport au plan de roulement Pr.

L'ogive est inclinée de telle sorte que son sommet S est décalé par rapport au plan de roulement Pr. Le drain 50 débouche typiquement au niveau du sommet S de l'ogive ; dans l'exemple illustré, le premier orifice 51 du drain est centré sur le sommet S. En fonctionnement nominal, ici avec une poussée (charge axiale) selon l'axe principal Z-Z dans un sens qui produit sur la bague interne 10 un effort axial dirigé de l'extrémité distale 1B vers l'extrémité proximale 1A, les éléments de roulement 30 viennent au contact de la portion de la piste externe 22 définie par le premier arc de cercle C1. Par ailleurs, en fonctionnement avec en outre un fort effet centrifuge sur les éléments de roulement 30, typiquement lorsque le facteur de vitesse est élevé, la zone de contact des éléments de roulement 30 sur la piste externe 22 se rapproche du plan de roulement et donc du sommet S de l'ogive. L'ogive est prévue suffisamment inclinée pour que cette zone de contact n'empiète pas sur l'orifice 51 de chaque drain.

Un tel mode de réalisation présente également l'avantage d'assurer qu'en cas d'inversion de poussée, les éléments de roulement 30 ne viennent pas au contact d'un orifice 51 du drain 50. En effet, dans une configuration en ogive inclinée formant la piste externe 22, les éléments de roulement 30 ne peuvent pas venir au contact du premier orifice 51 centré sur le sommet S de l'ogive. Dans le cas d'une inversion de poussée, les éléments de roulement viendraient ici au contact de la portion de la piste externe 22 définie par le second arc de cercle C2.

Ainsi, en positionnant de la sorte le drain au sommet S de l'ogive, on s'assure que les éléments de roulement 30 ne viennent pas au contact du drain, ce qui en cas d'utilisation du roulement dans un dispositif susceptible de subir une inversion de poussée permet d'employer des éléments de roulement 30 réalisés en acier et non pas en céramique. En effet, si la piste externe 22 était par exemple purement circulaire, et si des éléments de roulement 30 classiquement en acier étaient utilisés et pouvaient venir en contact avec le bord d'un orifice 51 d'un drain 50 en particulier lors d'une inversion de poussée, ces éléments de roulement 30 en acier seraient dégradés, ce qui nécessiterait alors d'employer des éléments de roulement 30 dans un matériau sensiblement plus dur, tel que de la céramique. Par ailleurs, contrairement aux structures connues, le sommet S de l'ogive est ici décalé par rapport au plan de roulement Pr. Cette structure permet ainsi également d'éviter un fonctionnement à quatre points de contact en cas de charge radiale importante, et donc d'éviter une dissipation de puissance résultant de deux points de contact entre les éléments de roulement 30 et la bague externe 20.

La présence de drains 50 permet d'assurer une circulation de fluide, assurant ainsi la lubrification et le refroidissement du roulement 1. La configuration représentée dans laquelle le drain 50 présente un second orifice 52 débouchant axialement permet de plus de réaliser ces fonctions pour un roulement 1 présentant un film d'huile ou « squeeze film », c'est-à-dire un film d'huile sous pression positionné entre la bague externe 20 et une pièce de structure. Ce film d'huile entoure en effet communément une paroi radiale externe de la bague externe 20. Le fait que le drain 50 débouche sur une extrémité axiale de la bague externe 20, et non pas sur une extrémité radiale de la bague externe, permet de séparer le fluide par rapport au film d'huile, et donc de réaliser ces deux fonctions sur le roulement 1.

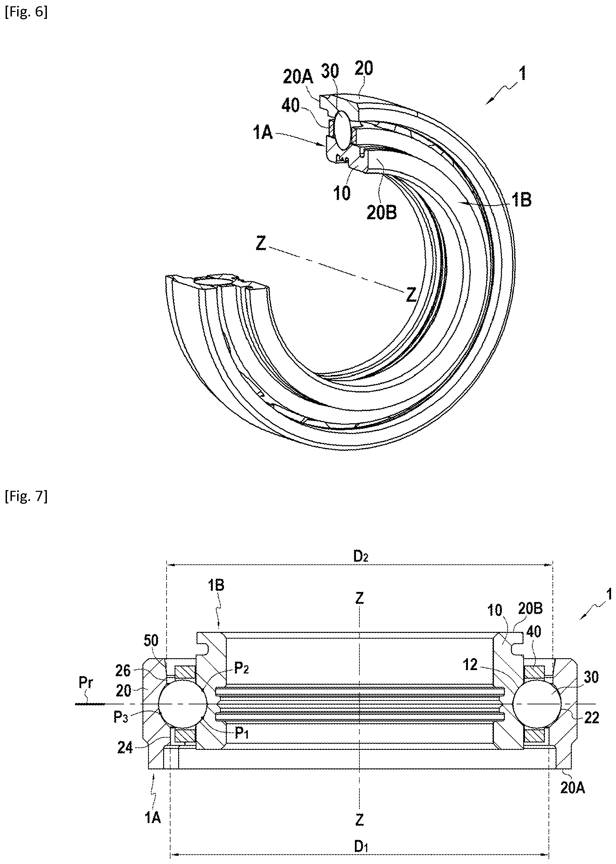

Les figures 6 et 7 présentent un autre mode de réalisation d'un roulement 1 selon un aspect de l'invention.

On retrouve dans ce mode de réalisation les différents éléments du roulement 1 tel que déjà présenté en référence aux figures 1 et 2.

Dans ce mode de réalisation, le drain 50 est continu sur toute la périphérie de la bague externe 20.

On réalise ainsi un drain en réduisant l'épaisseur de matière de la bague externe 20 pour la partie de la bague située entre le plan de roulement Pr et l'extrémité distale 20B de la bague externe 20.

Plus précisément, la piste de roulement 22 de la bague externe 20 définit deux épaulements de part et d'autre du plan de roulement Pr ; un épaulement proximal et un épaulement distal.

L'épaulement proximal présente un diamètre interne D1, et le troisième point de contact P3 est situé du côté de cet épaulement proximal. Le diamètre interne D1 est typiquement constant. La dimension du diamètre interne D1 est définie notamment en fonction de la charge axiale à laquelle sera soumis le roulement 1 dans les conditions prévues d'utilisation en fonctionnement nominal.

L'épaulement distal présente un diamètre interne D2 strictement supérieur au diamètre interne D1 de l'épaulement proximal, et donc l'épaulement distal présente une épaisseur plus faible que l'épaulement proximal. En effet, du fait de l'absence de point de contact entre les éléments de roulement 30 et la bague externe 20 dans cette zone dans les conditions prévues de fonctionnement nominal du roulement 1, cette région de la bague externe 20 n'est pas sollicitée et n'est pas soumise à des charges élevées. Cette épaisseur plus faible de l'épaulement distal permet de réaliser une circulation de fluide et ainsi de former un drain 50 continu sur toute la périphérie radiale interne de la bague externe 20. Comme précédemment, le drain ainsi formé débouche sur une extrémité axiale de la bague externe 20, à l'extrémité radiale interne d'une face de la bague externe 20 s'étendant radialement. Ce mode de réalisation est donc également compatible avec l'utilisation d'un film d'huile sous pression autour du roulement 1.

Dans l'exemple illustré, le diamètre interne de la bague externe 20 augmente depuis l'épaulement distal jusqu'à l'extrémité distale 20B de la bague externe 20, ce qui forme ainsi un chanfrein depuis la piste de roulement 22 de la bague externe 20 vers l'extrémité distale 20B de la bague externe 20. Ce mode de réalisation facultatif permet notamment d'améliorer la circulation du fluide et d'en faciliter l'évacuation.

L'épaulement distal présente typiquement une épaisseur non nulle, l'épaisseur correspondant ici à la différence entre le rayon interne de la piste de roulement 22 au niveau du plan de roulement Pr, et le rayon à l'extrémité distale de la piste de roulement 22. Conserver ainsi une épaisseur non nulle de l'épaulement distal permet de réaliser une fonction de reprise de charge ponctuelle dans des conditions de fonctionnement particulières, notamment dans le cas d'une inversion de la direction de la charge axiale selon l'axe principal Z-Z par rapport à la direction en fonctionnement nominal, et d'éviter alors un désassemblage des éléments du roulement 1.

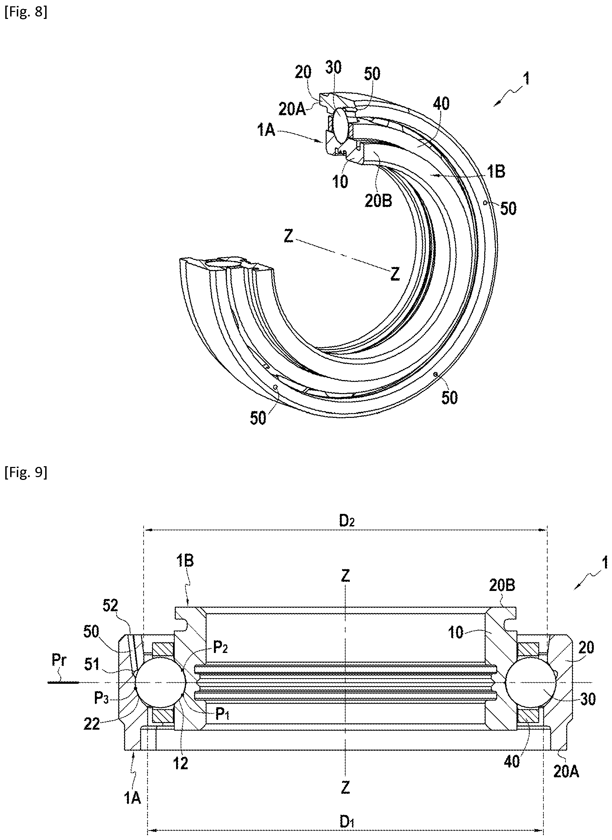

Les modes de réalisation représentés sur les figures 1 à 7 ne sont pas limitatifs et peuvent être combinés. A titre d'exemple, on peut ajouter des perçages de manière à former des drains 50 disjoints tels que visibles sur les figures 1 et 2 de manière analogue au mode de réalisation représenté sur les figures 3 et 4. On peut également faire varier l'épaisseur de la bague externe 20 dans le mode de réalisation représenté en référence aux figures 1 et 2. Les figures 8 et 9 illustrent un tel mode de réalisation, dans lequel l'épaulement distal présente une épaisseur plus faible que l'épaulement proximal, et dans lequel une pluralité de drains 50 disjoints sont formés dans la bague externe 20. Les autres éléments sont similaires aux éléments déjà décrits en référence aux figures précédentes.

Les roulements tels que présentés peuvent permettre ainsi de s'affranchir de la nécessité d'intégrer un système de refroidissement spécifique à air ou à huile dans une turbomachine, et peuvent permettre de minimiser le bilan thermique et d'optimiser le système de refroidissement.

Les roulements tels que présentés sont particulièrement adaptés pour des applications dans lesquelles un sens de rotation unique ou principal est prévu, ce qui est notamment le cas dans le domaine de l'aéronautique pour les turboréacteurs et turbomachines, et également pour l'entrainement de rotors d'hélicoptères et aéronefs, notamment par des machines électriques.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

L'invention est définie par les revendications annexées.

## Revendications

1. Roulement (1) à trois points de contact, comprenant une bague interne (10) et une bague externe (20) définissant respectivement une piste interne (12) et une piste externe (22) entre lesquelles sont disposés une pluralité d'éléments de roulement (30) sphériques, de manière à définir un mouvement de rotation selon un axe principal (Z-Z) entre la bague interne (10) et la bague externe (20), lesdits éléments de roulements (30) étant centrés sur un plan de roulement (Pr) perpendiculaire à l'axe principal (Z-Z),
dans lequel
la piste interne (12) définit un premier point de contact (P1) et un second point de contact (P2) distincts entre chaque élément de roulement (30) et la bague interne (10),
la piste externe (22) définit un troisième point de contact (P3) entre chaque élément de roulement (30) et la bague externe (20), ledit troisième point de contact (P3) étant situé dans un secteur de la piste externe (22) délimité par une extrémité proximale de la piste externe (22) d'une part, et par le plan de roulement (Pr) d'autre part,
la bague externe (20) comprend un drain (50) aménagé dans la piste externe (22), et débouchant d'une surface externe de la bague externe (20), ledit drain (50) débouchant sur la piste externe (22) de manière excentrée par rapport au plan de roulement (Pr), dans un secteur de la piste externe (22) délimité par le plan de roulement (Pr) d'une part et une extrémité distale de la piste externe (22) d'autre part, le drain (50) et le troisième point de contact (P3) étant disjoints,
**caractérisé en ce que** le drain (50) débouche d'une surface externe de la bague externe (20) s'étendant radialement par rapport à l'axe principal (Z-Z).

2. Roulement (1) selon la revendication 1, dans lequel le drain (50) s'étend selon une direction présentant une composante radiale non nulle et une composante axiale non nulle par rapport à l'axe principal (Z-Z).

3. Roulement (1) selon la revendication 1, dans lequel le drain (50) s'étend selon une direction parallèle à l'axe principal (Z-Z).

4. Roulement (1) selon la revendication 1, dans lequel le drain (50) s'étend selon une direction radiale par rapport à l'axe principal (Z-Z).

5. Roulement (1) selon la revendication 1, dans lequel le drain (50) s'étend selon une direction présentant une composante radiale non nulle, une composante axiale non nulle par rapport à l'axe principal (Z-Z) et une composante circonférentielle non nulle.

6. Roulement (1) selon l'une des revendications 1 à 6, dans lequel la bague externe (20) présente une extrémité proximale (20A) et une extrémité distale (20B), le troisième point de contact (P3) étant dans une zone délimitée axialement par l'extrémité proximale (20A) et par le plan de roulement (Pr),
et dans lequel la bague externe (20) forme un épaulement proximal et un épaulement distal de part et d'autre du plan de roulement (Pr) selon l'axe principal (Z-Z), lesdits épaulements présentant des dimensions distinctes selon une direction radiale par rapport à l'axe principal (Z-Z).

7. Roulement (1) selon la revendication 6, dans lequel l'épaulement proximal présente une épaisseur plus importante que l'épaulement distal, l'épaisseur étant mesurée selon une direction radiale par rapport à l'axe principal (Z-Z).

8. Roulement (1) selon l'une des revendications 1 à 7, dans lequel la bague externe (20) comprend une pluralité de drains (50) disjoints répartis autour de l'axe principal (Z-Z).

9. Roulement (1) selon l'une des revendications 1 à 8, dans lequel la piste externe (22) présente une forme d'ogive, formée par deux arcs de cercles ayant des centres distincts et qui s'intersectent en un point formant un sommet (S) de ladite ogive, et dans lequel le drain (50) débouche sur la piste externe (22) au niveau dudit sommet (S).

10. Roulement (1) selon l'une des revendications 1 à 8, dans lequel la piste externe (22) présente une forme d'arc de cercle, de manière à définir un unique point de contact avec chaque élément de roulement (30).

11. Roulement (1) selon l'une des revendications 1 à 10, dans lequel le drain (50) est formé par un alésage continu s'étendant depuis la piste externe (22) jusqu'à une extrémité distale (20B) de la bague externe (20).

12. Turbomachine comprenant au moins un roulement (1) selon l'une des revendications précédentes.

13. Aéronef comprenant une turbomachine selon la revendication précédente.

## Patentansprüche

1. Dreipunktwälzlager (1), das einen Innenring (10) und einen Außenring (20) umfasst, die eine Innenbahn (12) beziehungsweise eine Außenbahn (22) definieren, zwischen denen mehrere kugelförmige Wälzkörper (30) angeordnet sind, derart dass eine Drehbewegung entlang einer Hauptachse (Z-Z) zwischen dem Innenring (10) und dem Außenring (20) definiert wird, wobei die Wälzkörper (30) auf einer Wälzebene (Pr) senkrecht zur Hauptachse (Z-Z) zentriert sind, wobei
die Innenbahn (12) einen ersten Kontaktpunkt (P1) und einen zweiten Kontaktpunkt (P2), die sich voneinander unterscheiden, zwischen jedem Wälzkörper (30) und dem Innenring (10) definiert,
die Außenbahn (22) einen dritten Kontaktpunkt (P3) zwischen jedem Wälzkörper (30) und dem Außenring (20) definiert, wobei der dritte Kontaktpunkt (P3) sich in einem Sektor der Außenbahn (22) befindet, der einerseits durch ein proximales Ende der Außenbahn (22) und andererseits durch die Wälzebene (Pr) abgegrenzt ist,
der Außenring (20) einen Abfluss (50) umfasst, der in der Außenbahn (22) eingerichtet ist und von einer Außenoberfläche des Außenrings (20) mündet, wobei der Abfluss (50) auf in Bezug auf die Wälzebene (Pr) exzentrische Weise auf der Außenbahn (22) in einem Sektor der Außenbahn (22) mündet, der einerseits durch die Wälzebene (Pr) und andererseits durch ein distales Ende der Außenbahn (22) abgegrenzt ist, wobei der Abfluss (50) und der dritte Kontaktpunkt (P3) getrennt sind,
**dadurch gekennzeichnet, dass** der Abfluss (50) von einer Außenoberfläche des Außenrings (20) mündet, die sich radial in Bezug auf die Hauptachse (Z-Z) erstreckt.

2. Wälzlager (1) nach Anspruch 1, wobei der Abfluss (50) sich entlang einer Richtung erstreckt, die eine radiale Komponente von ungleich null und eine axiale Komponente von ungleich null in Bezug auf die Hauptachse (Z-Z) aufweist.

3. Wälzlager (1) nach Anspruch 1, wobei der Abfluss (50) sich entlang einer Richtung parallel zur Hauptachse (Z-Z) erstreckt.

4. Wälzlager (1) nach Anspruch 1, wobei der Abfluss (50) sich entlang einer radialen Richtung in Bezug auf die Hauptachse (Z-Z) erstreckt.

5. Wälzlager (1) nach Anspruch 1, wobei der Abfluss (50) sich entlang einer Richtung erstreckt, die eine radiale Komponente von ungleich null, eine axiale Komponente von ungleich null in Bezug auf die Hauptachse (Z-Z) und eine Umfangskomponente von ungleich null aufweist.

6. Wälzlager (1) nach einem der Ansprüche 1 bis 6, wobei der Außenring (20) ein proximales Ende (20A) und ein distales Ende (20B) aufweist, wobei der dritte Kontaktpunkt (P3) sich in einer Zone befindet, die axial durch das proximale Ende (20A) und durch die Wälzebene (Pr) abgegrenzt ist,
und wobei der Außenring (20) eine proximale Schulter und eine distale Schulter auf beiden Seiten der Wälzebene (Pr) entlang der Hauptachse (Z-Z) bildet, wobei die Schultern entlang einer in Bezug auf die Hauptachse (Z-Z) radialen Richtung unterschiedliche Abmessungen aufweisen.

7. Wälzlager (1) nach Anspruch 6, wobei die proximale Schulter eine größere Dicke aufweist als die distale Schulter, wobei die Dicke entlang einer in Bezug auf die Hauptachse (Z-Z) radialen Richtung gemessen wird.

8. Wälzlager (1) nach einem der Ansprüche 1 bis 7, wobei der Außenring (20) mehrere getrennte Abflüsse (50) umfasst, die um die Hauptachse (Z-Z) verteilt sind.

9. Wälzlager (1) nach einem der Ansprüche 1 bis 8, wobei die Außenbahn (22) eine Spitzbogenform aufweist, die durch zwei Kreisbögen gebildet ist, die unterschiedliche Mittelpunkte aufweisen und die sich an einem Punkt schneiden, der eine Spitze (S) des Spitzbogens bildet, und wobei der Abfluss (50) auf der Außenbahn (22) im Bereich der Spitze (S) mündet.

10. Wälzlager (1) nach einem der Ansprüche 1 bis 8, wobei die Außenbahn (22) eine Kreisbogenform aufweist, derart dass ein einziger Kontaktpunkt mit jedem Wälzkörper (30) definiert wird.

11. Wälzlager (1) nach einem der Ansprüche 1 bis 10, wobei der Abfluss (50) durch eine durchgehende Bohrung gebildet ist, die sich von der Außenbahn (22) bis zu einem distalen Ende (20B) des Außenrings (20) erstreckt.

12. Turbinentriebwerk, das mindestens ein Wälzlager (1) nach einem der vorhergehenden Ansprüche umfasst.

13. Luftfahrzeug, das ein Turbinentriebwerk nach dem vorhergehenden Anspruch umfasst.

## Claims

1. A three-point contact rolling bearing (1) comprising an inner ring (10) and an outer ring (20) defining respectively an inner raceway (12) and an outer raceway (22), between which are disposed a plurality of spherical rolling elements (30), so as to define a rotation movement along a main axis (Z-Z) between the inner ring (10) and the outer ring (20), said rolling elements (30) being centered on a rolling plane (Pr) perpendicular to the main axis (Z-Z),
wherein
the inner raceway (12) defines a first contact point (P1) and a second distinct contact point (P2) between each rolling element (30) and the inner ring (10), the outer raceway (22) defines a third contact point (P3) between each rolling element (30) and the outer ring (20), said third contact point (P3) being located in a sector of the outer raceway (22) delimited by a proximal end of the outer raceway (22), on the one hand, and by the rolling plane (Pr) on the other hand,
the outer ring (20) comprises a drain (50) provided in the outer raceway (22) and opening from an outer surface of the outer ring (20), said drain (50) opening eccentrically on the outer raceway (22) with respect to the rolling plane (Pr), in a sector of the outer raceway (22) delimited by the rolling plane (Pr) on the one hand, and a distal end of the outer raceway (22) on the other hand, the drain (50) and the third contact point (P3) being disjoint,
**characterized in that** the drain (50) opens from an outer surface of the outer ring (20) extending radially with respect to the main axis (Z-Z).

2. The rolling bearing (1) according to claim 1, wherein the drain (50) extends in a direction having a non-zero radial component and a non-zero axial component with respect to the main axis (Z-Z).

3. The rolling bearing (1) according to claim 1, wherein the drain (50) extends in a direction parallel to the main axis (Z-Z).

4. The rolling bearing (1) according to claim 1, wherein the drain (50) extends in a radial direction with respect to the main axis (Z-Z).

5. The rolling bearing (1) according to claim 1, wherein the drain (50) extends in a direction having a non-zero radial component, a non-zero axial component with respect to the main axis (Z-Z) and a non-zero circumferential component.

6. The rolling bearing (1) according to one of claims 1 to 6, wherein the outer ring (20) has a proximal end (20A) and a distal end (20B), the third contact point being in an area delimited axially by the proximal end (20A) and by the rolling plane (Pr),
and wherein the outer ring (20) forms a proximal shoulder and a distal shoulder on either side of the rolling plane (Pr) along the main axis (Z-Z), said shoulders having distinct dimensions in a radial direction with respect to the main axis (Z-Z).

7. The rolling bearing (1) according to claim 6, wherein the proximal shoulder has a greater thickness than the distal shoulder, the thickness being measured in a radial direction with respect to the main axis (Z-Z).

8. The rolling bearing (1) according to one of claims 1 to 7, wherein the outer ring (20) comprises a plurality of disjoint drains (50) distributed around the main axis (Z-Z).

9. The rolling bearing (1) according to one of claims 1 to 8, wherein the outer raceway (22) has an ogive shape, formed by two circular arcs having distinct centers and which intersect at a point forming a peak (S) of said ogive, and wherein the drain (50) opens on the outer raceway (22) at said peak (S).

10. The rolling bearing (1) according to one of claims 1 to 8, wherein the outer raceway (22) has the shape of a circular arc, so as to define a single contact point with each rolling element (30).

11. The rolling bearing (1) according to one of claims 1 to 10, wherein the drain (50) is formed by a continuous bore extending from the outer raceway (22) until a distal end (20B) of the outer ring (20).

12. A turbine engine comprising at least one rolling bearing (1) according to one of the preceding claims.

13. An aircraft comprising a turbine engine according to the preceding claim.
